Europäisches Patentamt

European Patent Office

Office européen des brevets

(19)

(11) Publication number: **0 028 707**
**B1**

(12) EUROPEAN PATENT SPECIFICATION

(45) Date of publication of patent specification: **05.10.83**

(51) Int. Cl.³: **H 02 N 13/00, B 41 J 9/40**

(21) Application number: **80106081.5**

(22) Date of filing: **07.10.80**

(54) Electrostatic clutch.

(30) Priority: **05.11.79 US 91310**

(43) Date of publication of application:
**20.05.81 Bulletin 81/20**

(45) Publication of the grant of the patent:
**05.10.83 Bulletin 83/40**

(84) Designated Contracting States:
**DE FR GB**

(56) References cited:
**FR - A - 1 099 790**
**GB - A - 1 128 757**
**US - A - 3 157 541**
**US - A - 3 343 635**
**US - A - 3 655 019**
**US - A - 3 871 944**

**IBM TECHNICAL DISCLOSURE BULLETIN vol. 4, no. 10, March 1962 New York US R. L. SCHAAF: "Contour controlled electrostatic clutch"**

(73) Proprietor: **International Business Machines Corporation**
**Old Orchard Road**
**Armonk, N.Y. 10504 (US)**

(72) Inventor: **Cuomo, Jerome J.**
**Post Office Box 353**
**Lincolndale, NY 10540 (US)**
Inventor: **Landon, Alfred J.**
**1 Cross Lane**
**Peekskill, NY 10566 (US)**
Inventor: **Wang, Han Chung**
**3116 Poplar Street**
**Yorktown Heights, NY 10598 (US)**

(74) Representative: **Suringar, Willem Joachim**
**IBM Nederland N.V. Patent Operations**
**Watsonweg 2**
**NL-1423 ND Uithoorn (NL)**

Courier Press, Leamington Spa, England.

Electrostatic clutch

This invention relates to an electrostatic clutch operable by the Johnsen-Rahbek effect.

The Johnsen-Rahbek effect refers to electrostatic adhesion between the surface of an electrically conducting member and a closely adjacent surface of a semiconductive member under an applied voltage. This effect and application thereof are well known, and are described in the literature, e.g., in Fitch, C. J., "Development of the Electrostatic Clutch" IBM Journal of Research and Development, Volume I, January, 1957 page 49 et seq., and in Stuckes, A.D., "Some Theoretical and Practical Considerations of the Johnsen-Rahbek Effect" Proceedings I.E.E., Volume 103, Part No. 8, March, 1956 page 125 et seq.

Although a clutch operable by the Johnsen-Rahbek effect is favored by the development of relatively high mechanical forces using only low levels of input control energy, problems of wear and heat generation present formidable barriers to this utilization of the Johnsen-Rahbek effect.

Various attempts have been made to overcome or compensate for these problems. For example, US—A—2,850,908, issued September 9, 1958 describes a particular mechanical arrangement utilizing a pivoted lever having arms of unequal lengths in order to minimize wear and heating at the position at which maximum friction would normally occur. US—A—3,871,944, issued March 18, 1975 describes an integral laminar composite semiconductive element which may be used in electrostatic clutch or break devices in which a layer of semiconductive particles and a layer of metal particles are integrated with and bonded together by a hard non-conductive thermoset bonding resin; among the materials that may constitute the semi-conductive particles described therein are silicon carbide limestone, slate, barium titanate, etc., with phthaleinfluoran polymers being described as the preferred semiconductive material.

Another electrostatic clutch employing a metal band and a drum having a semiconductive surface layer is disclosed in US—A—3,343,635.

While the problems of wear and heat generation have been somewhat alleviated by such means, a continuing need for improved devices utilizing the Johnsen-Rahbek effect still exists.

According to the present invention as claimed, an improved electrostatic clutch operable by e Johnsen-Rahbek effect is provided. The clutch comprises a rotatable drum and a metal band engageable therewith, wherein the engageable surface of the drum is a semiconductive surface prepared by depositing a layer of substantially pure silicon carbide onto a conductive substrate.

In another aspect, the invention relates to a print hammer device comprising one or more print hammers actuated by an electrostatic clutch according to the invention.

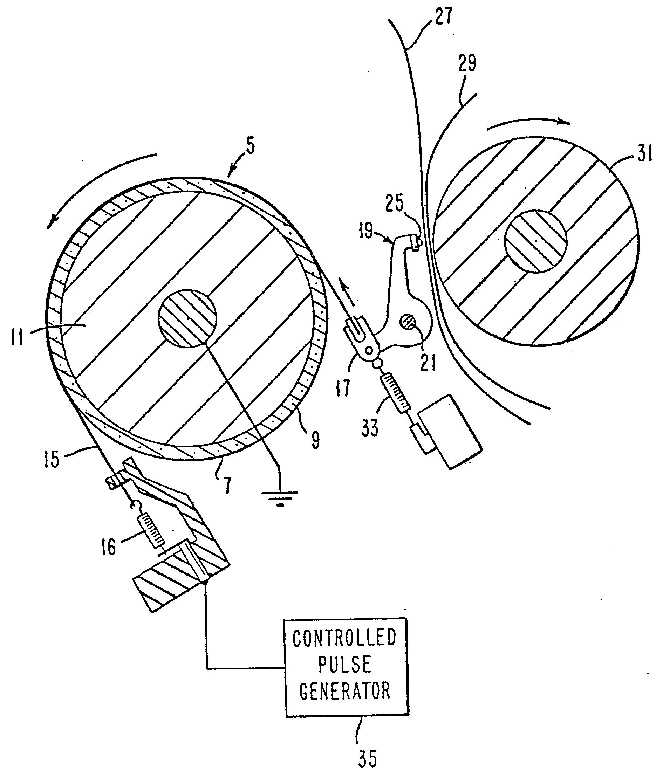

The drawing illustrates an electrostatic clutch and print hammer according to the invention.

The use of a layer of silicon carbide as the semiconductive surface of the drum of the electrostatic clutch is advantageous in that the silicon carbide layer possesses superior wear and heat resistant properties compared to the semiconductive surfaces of electrostatic clutches according to the prior art. Furthermore, by preparing the semiconductive surface by sputtering or vapor depositing a layer of silicon carbide onto a conductive substrate to form a very thin and smooth coating, it is possible that no machining may be required after deposition, although machining may be employed to enhance the smoothness of relatively thick silicon carbide layers formed according to the invention.

The silicon carbide layer may be amorphous or crystalline, with a crystalline nature predominating when the silicon carbide layer is formed by high temperature (e.g., greater than 650°C) chemical vapor deposition techniques, and an amorphous nature predominates when the silicon carbide layer is formed by low temperature (e.g., 300°C to 600°C) techniques, such as glow discharge and sputtering.

Although the sputtered or vapor deposited layer of silicon carbide is substantially pure, i.e. does not include other materials, such as a polymeric binder, which would affect the mechanical properties thereof, the substantially pure silicon carbide may include minor amounts of dopants for the purpose of controlling the electrical characteristics of the layer.

In one embodiment according to the invention, the semiconductive surface is prepared by vapor depositing a layer of substantially pure silicon carbide onto a conductive substrate. Among the vapor deposition techniques that can be used in preparation of an electrostatic clutch including a layer of substantially pure silicon carbide on the drum surface thereof according to the invention are chemical vapor deposition and glow discharge deposition. Such techniques are described for example, in: (1) Fitzer, E. and Hegen, D., "Chemical Vapor Deposition of Silicon Carbide and Silicon Nitride—Chemistry's Contribution to Modern Silicon Ceramics", Angew. Chem. Int. Ed. Engl., Vol. 18, 1979, page 295 et seq.; (2) Anderson, D. A., "The Electrical and Optical Properties of Amorphous Carbon Prepared by the Glow Discharge Technique", Philosophical Magazine, Vol. 35, 1977, No. 1, page 17 et seq.; (3) U.S. Patent 3,011,912, issued May 12, 1961; (4) Henish and Roy, Silicon Carbide—1968, International Conference on Silicon Cabide—1968, Pergamon Press 1969; (5) Wieder, H., Cardova, M., and Guarnieri, C. R., "Vibrational Spectrum of Hydrogenated Amorphous Si-C Films", Physika Sta. Sol., 1979, page 99 et seq.; and (6) Bean, K. E. and Gleim, P. S., J. Electrochem. Soc., Vol. 114, 1967, page 1158 et seq.

In another preferred embodiment of the invention, the engageable surface of the drum of the electrostatic clutch is a semiconductive surface prepared by sputtering a layer of silicon carbide onto a conductive substrate. Sputtering techniques that can be used to form a layer of silicon carbide in preparation of an electrostatic clutch according to the invention include those described in Nishino et al, "Preparation of β-SiC Films by r.f. Sputtering" Thin Solid Films, Vol. 40, 1977, page 127 et seq.; and Brodsky, M. H., Cardova, M., and Cuono, J. J., Phys. Rev. B, Vol. 16, 1977, page 3556 et seq. Appld. Phys. Letters, Vol. 30, 1977, page 5314.

The layer of silicon carbide deposited onto the conductive substrate by sputtering or vapor deposition thereof is substantially pure silicon carbide. The substantially pure silicon carbide may include minor amounts of one or more dopants, for the purpose of adjusting the electrical characteristics of the silicon carbide layer. Typically, it is desired that the resistivity of the silicon carbide be within a range from about $10^5$ to $10^7$ ohm-cm. Ultrapure silicon carbide has a resistivity of about $10^9$ ohm-cm.

The resistivity of the silicon carbide can be altered, in a controllable manner, by the inclusion of other chemical elements in the silicon carbide matrix, or by using non-stoichiometric proportions of silicon and carbon in forming the silicon carbide layer. Dopants useful in adjusting the electrical characteristics, e.g., resistivity, of the substantially pure silicon carbide layer forming the semiconductive surface of the drum of electrostatic clutch elements according to the invention include chemical elements from Groups IIIa and Va of the Periodic Table of the Elements, such as boron, nitrogen, aluminum, and phosphorus.

Due to the presence of impurities, including Group IIIa and Va dopants, silicon carbide may be less resistive than desired; in this event the resistivity can be raised by doping with hydrogen, as described above in Wieder et al, "Vibrational Spectrum of Hydrogenated Amorphous SiC Films", Physika Sta. Sol., 1979, page 99 et seq.

The use of non-stoichiometric proportions of silicon and carbon is described, e.g., in Bean et al, J. Electrochem. Soc., Vol. 114, 1967, page 1158 et seq., cited above.

The resistance of the silicon carbide layer depends both upon the resistivity of the silicon carbide material and the thickness of the layer. In an electrostatic clutch according to the invention, it is generally desirable that the thickness of the layer be between 10 $\mu$m and 2,500 $\mu$m, although it is possible to prepare a useful clutch with a silicon carbide layer of greater or lesser thickness than this range. In more preferred embodiments of the invention, the silicon carbide layer has a thickness between 10 $\mu$m and 1,500 $\mu$m, and most preferably has a thickness between 100 $\mu$m and 500 $\mu$m.

The substrate onto which the layer of silicon carbide is sputtered or vapor deposited to form the semiconductive surface on the rotatable drum must be electrically conductive. The substrate may comprise a base metal or conductive carbon. Preferred substrate materials include carbon, silicon, molybdenum, stainless steel, titanium alloys and aluminum alloys. The conductive substrate is electrically connected to a means capable of generating a pulse of applied voltage sufficient to create electrostatic adhesion by the Johnsen-Rahbek effect between the rotatable drum and band engageable therewith in an electrostatic clutch according to the invention.

The band of an electrostatic clutch according to the invention may be formed from numerous materials which will exhibit frictional adhesion to the semiconductive silicon carbide surface of the rotatable drum upon application of an applied voltage between the band and the drum, which causes engagement of the band and the rotatable drum by the Johnsen-Rahbek effect. The material of which the band is formed must be electrically conductive, and desirably should be both ductile and wear resistant. Preferred materials from which the band may be formed include stainless steel and tungsten alloys.

In a preferred aspect of the invention, a print hammer device is provided in which one or more print hammers are actuated by an electrostatic clutch element according to the invention. For instance, a print hammer device as described in U.S. Patent 2,850,908, issued September 9, 1958, cited above, modified so that the semiconductive surface of the drum of the electrostatic clutch element is prepared by sputtering or vapor depositing a layer of substantially pure silicon carbide onto a conductive substrate, is an example of a print hammer device according to the invention. Other print hammer devices in which the print hammer(s) can be actuated by an electrostatic clutch element according to the present invention include those described in U.S. Patent 3,929,067, issued December 30, 1975, and U.S. Patent 2,909,996, issued October 27, 1969.

Referring to the drawing a print hammer device utilizing an electrostatic clutch element according to the invention is illustrated. In operation, the rotatable drum 5 having an engageable surface 7 prepared by sputtering or vapor depositing a layer 9 of substantially pure silicon carbide onto a conductive substrate 11 (e.g., carbon) momentarily engages a steel band 15 in response to an electric pulse signal applied to the band, which causes momentary engagement, adhesion, and movement of the steel band by means of the Johnsen-Rahbek effect.

For instance, as illustrated in the drawing, the electrical pulse signal is transmitted to the band from a controlled pulse generator 35 through an electrical connection, e.g., through a spring directly attached to the band and holding the band in contact with the rotatable drum; the pulse results in passage of current from the band through the silicon carbide layer to the electrically grounded conductive substrate. Movement of the steel band in the direction indicated causes member 17 to actuate print hammer 19 to rotate about axis 21 thereof in the direction indicated to cause a printing character 25, e.g., a dot, to impinge upon an inked ribbon 27 to transfer an image corresponding to the printing character 25 to a paper 29, against a platten 31. Spring 33 restores the print hammer to its original position.

Example 1

An electrostatic clutch element as illustrated in the drawing was prepared by sputtering silicon carbide onto a two inch (5 cm) diameter solid carbon cylinder to form a layer of silicon carbide 75 $\mu$m thick. The thus-coated cylinder was used as a drum of an electrostatic clutch according to the invention, being rotated at a surface speed of 40 inches per second (1 m/s). A steel band having a thickness of about 0.002 inches (0,05 mm) and a width of 0.100 inches (2,5 mm) was wrapped around the drum cylinder for about 180° thereof with the width portion of the steel band contacting the drum cylinder, but with such light force that the rotating drum cylinder does not impart any movement to the steel band. Upon application of an electric pulse of 300 $\mu$ seconds at 100 V, the steel band frictionally engages the rotating drum and generates a motion sufficient to drive a print hammer. After 100 hours of operation under the above-described conditions, with an electrical pulse frequency of 100 cycles/second, no measurable change in the thickness of the silicon carbide layer was detectable using a micrometer.

Claims

1. An electrostatic clutch operable by the Johnsen-Rahbek effect, comprising a rotatable drum (5) and a metal band (15) engageable therewith, wherein the engageable surface (7) of the drum is a semiconductive surface, characterized in that said semiconductive surface is prepared by depositing a layer (9) of substantially pure silicon carbide onto a conductive substrate (11).

2. An electrostatic clutch as in claim 1 wherein the layer of silicon carbide is prepared by sputtering.

3. An electrostatic clutch as in claim 1 wherein the layer of silicon carbide is prepared by vapor deposition.

4. An electrostatic clutch as in any of claims 1—3 wherein the layer of silicon carbide has a thickness between 10 $\mu$m and 2,500 $\mu$m.

5. An electrostatic clutch as in claim 4 wherein the layer of silicon carbide has a thickness between 10 $\mu$m and 1,500 $\mu$m.

6. An electrostatic clutch as in claim 5 wherein the layer of silicon carbide has a thickness between 100 $\mu$m and 500 $\mu$m.

7. An electrostatic clutch as in any of claims 1—6 wherein the band is formed of stainless steel or a tungsten alloy.

8. An electrostatic clutch element as in any of claims 1—7 wherein the conductive substrate is carbon, silicon, molybdenum, stainless steel, a titanium alloy or an aluminum alloy.

9. An electrostatic clutch as in any of claims 1—8 wherein the layer of silicon carbide is doped with at least one chemical element selected from the Group IIIa and Va elements, in an amount effective to cause the resistivity of the silicon carbide forming the semiconductive layer to be within the range $10^5$ to $10^7$ ohm-cm.

10. An electrostatic clutch as in any of claims 1—9 wherein the layer of silicon carbide is doped with at least one chemical element selected from the group consisting of hydrogen, boron, nitrogen, aluminum, and phosphorous, in an amount effective to cause the resistivity of the silicon carbide forming the semiconductive layer to be within the range $10^5$ to $10^7$ ohm-cm.

11. A print hammer device comprising one or more print hammers actuated by an electrostatic clutch as in any of claims 1—10.

Patentansprüche

1. Nach dem Johnsen-Rahbek Effekt arbeitende elektrostatische Kupplung, mit einer umlaufenden Trommel (5) und einem von dieser mitnehmbaren metallischen Band (15), wobei die Mitnehmerfläche (7) als Halbleiterfläche ausgebildet ist, dadurch gekennzeichnet, daß die Halbleiterfläche durch Aufbringen einer Schicht (9) von im wesentlichen reinem Siliciumcarbid auf ein leitendes Substrat (11) gebildet ist.

2. Elektrostatische Kupplung nach Anspruch 1, bei der die Siliciumcarbidschicht durch Sputtern aufgebracht ist.

3. Elektrostatische Kupplung nach Anspruch 1, bei der die Siliciumcarbidschicht durch Dampfniederschlag aufgebracht ist.

4. Elektrostatische Kupplung nach einem der Ansprüche 1 bis 3, bei der die Siliciumcarbidfläche eine Dicke zwischen 10 $\mu$m und 2500 $\mu$m aufweist.

5. Elektrostatische Kupplung nach Anspruch 4, bei der die Siliciumcarbidfläche eine Dicke zwischen 10 $\mu$m und 1500 $\mu$m aufweist.

6. Elektrostatische Kupplung nach Anspruch 5, bei der die Siliciumcarbidschicht eine Dicke zwischen 100 $\mu$m und 500 $\mu$m aufweist.

7. Elektrostatische Kupplung nach einem der Ansprüche 1 bis 6, bei der das Band aus rostfreiem Stahl oder einer Wolframlegierung besteht.

8. Elektrostatisches Kupplungselement nach

7   0 028 707   8

einem der Ansprüche 1 bis 7, bei dem das leitende Substrat aus Kohlenstoff, Silicium, Molybdän, rostfreiem Stahl, einer Titanlegierung oder einer Aluminiumlegierung besteht.

9. Electrostatische Kupplung nach einem der Ansprüche 1 bis 8, bei der die Siliciumcarbidschicht mit zumindest einem chemischen Element aus der Elementengruppe IIIa und Va in einer Menge dotiert ist, die einen spezifischen Widerstand des die Halbleiterschicht bildenden Siliciumcarbids in der Größenordnung von $10^5$ bis $10^7$ Ohm · cm erzeugt.

10. Elektrostatische Kupplung nach einem der Ansprüche 1 bis 9, bei der die Siliciumcarbidschicht mit mindestens einem chemischen Element aus der Gruppe dotiert ist, die Wasserstoff, Bor, Stickstoff, Aluminium und Phosphor enthält, in einer Menge, die einen spezifischen Widerstand des die Halbleiterschicht bildenden Siliciumcarbids in der Größenordnung von $10^5$ bis $10^7$ Ohm · cm erzeugt.

11. Druckhammeranordnung mit einem Druckhammer oder mehreren Druckhämmern, die mittels einer elektrostatischen Kupplung nach einem der Ansprüche 1 bis 10 betätigt wird.

**Revendications**

1. Embrayage électrostatique fonctionnant par effet de Johnsen-Rahbek, comprenant un tambour rotatif (5) et une bande métallique (15) venant s'engager avec ce dernier, dans lequel la surface d'engagement (7) du tambour est une surface semi-conductrice, caractérisé en ce que ladite surface semi-conductrice est préparée en déposant une couche (9) de carbure silicium pur sur un substrat conducteur (11).

2. Embrayage électrostatique selon la revendication 1, dans lequel la couche de carbure de silicium est préparée par pulvérisation.

3. Embrayage électrostatique selon la revendication 1, dans lequel la couche de carbure de silicium est préparée à l'aide d'un dépôt de vapeur.

4. Embrayage électrostatique selon l'une quelconque des revendications 1 à 3, dans lequel la couche de carbure de silicium a une épaisseur située entre 10 $\mu$m et 2500 $\mu$.

5. Embrayage électrostatique selon la revendication 4, dans lequel la couche de carbure de silicium a une épaisseur située entre 10 $\mu$m et 1500 $\mu$m.

6. Embrayage électrostatique selon la revendication 5, dans lequel la couche de carbure de silicium a une épaisseur située entre 100 $\mu$m et 500 $\mu$m.

7. Embrayage électrostatique selon l'une quelconque des revendications 1 à 6, dans lequel la bande est faite dans de l'acier inoxydable ou dans un alliage de tungstène.

8. Embrayage électrostatique selon l'une quelconque des revendications 1 à 7, dans lequel le substrat conducteur est du carbone, du silicium, du molybdène, de l'acier inoxydable, un alliage de titane ou une alliage d'aluminium.

9. Embrayage électrostatique selon l'une quelconque des revendications 1 à 8, dans lequel la couche de carbure de silicium est dopée avec au moins un élément chimique sélectionné dans le groupe IIIa et le groupe Va suivant une quantité pouvant provoquer la résistivité du carbure de silicium formant la couche semi-conductrice dans la gamme de $10^5$ à $10^7$ ohm · cm.

10. Embrayage électrostatique selon l'une quelconque des revendications 1 à 9, dans lequel la couche de carbure de silicium est dopée avec au moins un élément chimique sélectionné dans le groupe hydrogène, bore, azote, aluminium et phosphore suivant un quantité telle que la résistivité du carbure de silicium formant la couche semi-conductrice se trouve dans la gamme de $10^5$ à $10^7$ ohm · cm.

11. Dispositif de marteau d'impression comprenant un ou plusieurs marteaux d'impression actionné par un embrayage électrostatique selon l'une quelconque des revendications 1 à 10.

CONTROLLED
PULSE
GENERATOR